# EUROPÄISCHE PATENTSCHRIFT

(11) **EP 2 072 092 B1**
(45) Veröffentlichungstag und Bekanntmachung des Hinweises auf die Patenterteilung: **02.12.2009**
(21) Anmeldenummer: 07123634.3
(22) Anmeldetag: 19.12.2007
(51) Int. Cl.: A63B 29/02

(54) **Suchgerät und Verfahren zum Betreiben eines Suchgeräts**
Locator device and method for operating a locator device
Dispositif de localisation et procédé de fonctionnement d'un dispositif de localisation

(43) Veröffentlichungstag der Anmeldung: 24.06.2009
(73) Patentinhaber: Kampel, Gerald, 82024 Taufkirchen (DE)
(72) Erfinder: Matzner, Rolf, 86938 Schondorf (DE); Kampel, Gerald, 82024 Taufkirchen (DE)
(74) Vertreter: Schurack, Eduard F.

(56) Entgegenhaltungen:
- EP-A- 1 626 379
- EP-A- 1 785 169
- DE-A1- 10 109 284
- DE-C1- 19 510 875

## Beschreibung

Die vorliegende Erfindung betrifft ein Suchgerät, insbesondere ein Lawinen-Verschütteten-Suchgerät, mit einer Empfangseinheit zum Empfangen von Sendesignalen zur Ortung eines Senders und einer Sendeeinheit zum Senden von Sendesignalen, wobei zumindest der Sendeeinheit mindestens eine erste und eine zweite Sendeantenne zugeordnet sind, die in unterschiedlichen Raumrichtungen orientiert im Suchgerät angeordnet sind, wobei im Sendebetrieb nur eine der Sendeantennen in Betrieb ist. Sie betrifft überdies ein Verfahren zum Betreiben eines entsprechenden Suchgeräts.

Ein derartiges Suchgerät und ein derartiges Verfahren sind bekannt aus der EP 1 439 400 A2. Bei derartigen Suchgeräten treten in der Praxis immer wieder Fälle auf, bei denen das Suchgerät erst bei Entfernungen von weniger als 20 m vom Verschütteten ein Sendesignal empfängt und damit die Ortung des Verschütteten eingeleitet werden kann. Um daher sicherzustellen, dass der Verschüttete gefunden wird, müsste ein einzelner Sucher bei der Suche so über das Lawinenfeld gehen , dass der Abstand eines Suchstreifens zum Rand des Lawinenfelds maximal 10 m beträgt und der Abstand zwischen den Suchstreifen auf diesen "worst case" ausgelegt ist, d. h. maximal 20 m beträgt. Bei mehreren Suchern müßten die Sucher in einem Abstand zueinander in einer geraden Linie das Lawinenfeld abschreiben, der ebenfalls auf diesen "worst case" ausgelegt ist, d. h. ebenfalls maximal 20 m.
Die Aufgabe der vorliegenden Erfindung besteht darin, ein Suchgerät beziehungsweise ein Verfahren der eingangs genannten Art derart weiterzubilden, dass dadurch der Abstand der Suchstreifen bei einem einzelnen Sucher beziehungsweise der Abstand von Suchern zueinander bei mehreren Suchern erhöht werden kann.

Diese Aufgabe wird gelöst durch ein Suchgerät mit den Merkmalen von Patentanspruch 1 beziehungsweise durch ein Verfahren mit den Merkmalen von Patentanspruch 10.

Der vorliegenden Erfindung liegt zunächst die Erkenntnis zugrunde, dass bei den bekannten Suchgeräten immer dieselbe Antenne als Sendeantenne verwendet wird. Kommt diese Antenne beim Verschütten durch eine Lawine in horizontaler Lage zum Liegen, läuft ein Großteil der von der Sendeantenne ausgehenden Feldlinien durch die üblicherweise horizontal gehaltene Antenne des Suchgeräts des Suchenden. Dies würde einen Abstand der Suchstreifen von nahezu dem Doppelten des Abstands bei bekannten Suchgeräten ermöglichen. Probleme ergeben sich jedoch, wenn die Sendeantenne des verschütteten Suchgeräts in vertikaler Orientierung zu liegen kommt. Dann verläuft nämlich ein Großteil der von der Sendeantenne ausgehenden Feldlinien senkrecht durch die Empfangsantenne des Suchgeräts des Suchenden. Dadurch werden Empfangspegel von nur sehr geringer Feldstärke erzeugt. Es ist daher davon auszugehen, dass die letztgenannte Konstellation verantwortlich ist für die Dimensionierung des Abstands der Suchstreifen beziehungsweise der Suchenden im Stand der Technik.

Die vorliegende Erfindung basiert nun weiterhin auf der Erkenntnis, dass in gattungsgemäßen Suchgeräten ohnehin mehrere, in unterschiedliche Raumrichtungen orientierte Antennen vorhanden sind, zwischen denen beim Empfang, d. h. im Suchbetrieb, hin- und hergeschaltet wird. Während im Stand der Technik unabhängig von der Lage des verschütteten Suchgeräts immer dieselbe Sendeantenne zum Einsatz kommt, wird bei einem erfindungsgemäßen Suchgerät nunmehr lageabhängig die Sendeantenne zum Senden verwendet, die die günstigere Lage einnimmt. Die günstigere Lage zeichnet sich dadurch aus, dass bei einem horizontal gehaltenen Suchgerät des Suchers mit der sich in der günstigeren Lage befindende Sendeantenne eine höhere Feldstärke erzeugt werden kann als mit der anderen oder einer der anderen Sendeantennen.

Ein erfindungsgemäßes Suchgerät umfasst daher weiterhin mindestens einen Lagesensor, der ausgelegt ist, eine Raumlage des Suchgeräts zu bestimmen und an seinem Ausgang ein Lagesignal bereitzustellen, das mit der Raumlage korreliert ist, sowie eine Umschaltvorrichtung, die einerseits mit dem mindestens einen Lagesensor zur Zuführung des Lagesignals und andererseits mit der mindestens einen ersten und zweiten Sendeantenne gekoppelt ist. Dabei ist der ersten Sendeantenne ein erster Wertebereich des Lagesignals und der zweiten Sendeantenne ein zweiter Wertebereich des Lagesignals zugeordnet, wobei die Umschaltvorrichtung ausgelegt ist, im Sendebetrieb das Sendesignal über die erste Sendeantenne zu senden, wenn das Lagesignal im ersten Wertebereich liegt, und im Sendebetrieb das Sendesignal über die zweite Sendeantenne zu senden, wenn das Lagesignal im zweiten Wertebereich liegt. Die Wertebereiche können herstellerseitig ausgemessen und festgelegt werden. Sie werden dann bevorzugt in einer Speichervorrichtung des Suchgeräts abgelegt.

Die Erfindung ermöglicht, den Abstand der Suchstreifen beziehungsweise den Abstand der Suchenden nahezu zu verdoppeln. Dadurch lässt sich die Zeit für die Suche eines Verschütteten nahezu halbieren. Dies führt zu einer deutlichen Erhöhung der Überlebenswahrscheinlichkeit des beziehungsweise der Verschütteten.

Eine bevorzugte Ausführungsform eines erfindungsgemäßen Suchgeräts zeichnet sich dadurch aus, dass das Suchgerät weiterhin eine dritte Sendeantenne umfasst, der ein dritter Wertebereich des Lagesignals zugeordnet ist, wobei die Umschaltvorrichtung ausgelegt ist, das Sendesignal über die dritte Sendeantenne zu senden, wenn das Lagesignal im dritten Wertebereich liegt. Diese Maßnahme trägt dem Umstand Rechnung, dass im Stand der Technik mittlerweile auch Suchgeräte bekannt sind, die drei Antennen aufweisen, wobei diese jedoch im Stand der Technik nur zum Empfang verwendet werden und nur eine davon, und zwar immer die gleiche, zum Senden. Auch wenn die dritte Antenne üblicherweise deutlich kürzer, meist halb so groß, ausgebildet ist wie die beiden anderen Antennen, sind Konstellationen denkbar, in denen eine derartige dritte Antenne den größten Sendeerfolg verspricht.

Bevorzugt ist zumindest die erste und die zweite Sendeantenne orthogonal zueinander angeordnet. Die Sendeantennen können jedoch eine beliebige Lage zueinander einnehmen, um den erfindungsgemäßen Erfolg zu realisieren, sofern sie nur in unterschiedliche Raumrichtungen orientiert sind. So sind Konstellationen bekannt, in denen zwei Antennen X-förmig zueinander angeordnet sind, wobei der von den Antennen eingeschlossene Winkel gleich oder auch ungleich 90° ist.

Bevorzugt umfasst der Lagesensor einen Magnetfeldsensor, insbesondere einen dreidimensionalen Magnetfeldsensor, zur Auswertung des Erdmagnetfelds zur Bestimmung der Lage des Suchgeräts. Zwischenzeitlich sind Suchgeräte bekannt geworden, beispielsweise aus der DE 10 2004 027 314 B4, die einen Magnetfeldsensor umfassen, der dort jedoch dazu verwendet wird, bei der Suche nach einem Verschütteten jedem empfangenen Sendesignal einen Suchwinkel relativ zum Erdmagnetfeld zuzuordnen. Ein derartiger, ohnehin vorhandener Magnetfeldsensor kann nun auch im Sendebetrieb eine vorteilhafte Anwendung erfahren.

Alternativ oder zusätzlich kann der Lagesensor mindestens einen Neigungssensor, insbesondere mindestens einen zweiachsigen Neigungssensor, zur Bestimmung der Lage des Suchgeräts umfassen. Aus der genannten DE 10 2004 027 317 B4 ist auch die Verwendung von Neigungssensoren bekannt, die dort jedoch dazu verwendet werden, die Neigung des Suchgeräts bei der Zuordnung eines Suchwinkels zu jedem empfangenen Sendesignal relativ zum Erdmagnetfeld zu bestimmen.

Alternativ oder zusätzlich kann der Lagesensor mindestens einen Beschleunigungssensor und/oder einen Gyrosensor zur Bestimmung der Lage des Suchgeräts aufweisen.

In einem bevorzugten Ausführungsbeispiel ist die erste Sendeantenne in Längsrichtung des Suchgeräts und die zweite Sendeantenne in Querrichtung des Suchgeräts angeordnet, wobei dem zweiten Wertebereich eine Lage des Suchgeräts mit einer Neigung des Suchgeräts kleiner gleich 30°, bevorzugt kleiner gleich 20°, gegenüber der Vertikalen zugeordnet ist. Eine genaue Ermittlung des Winkels ab dem von der ersten auf die zweite Sendeantenne umgeschaltet werden sollte, wird bevorzugt herstellerseitig bestimmt. Bei drei Sendeantennen ist entsprechend Neigungs- und Kippwinkel zu spezifizieren.

Ein erfindungsgemäßes Verfahren zeichnet sich dadurch aus, dass in einem ersten Schritt zunächst die Raumlage des Suchgeräts bestimmt wird und anschließend in einem zweiten Schritt das Sendesignal über die Sendeantenne gesendet wird, der die im ersten Schritt bestimmte Raumlage zugeordnet ist.

Bei einer bevorzugten Ausführungsform des erfindungsgemäßen Verfahrens werden zuvor jedoch folgende Schritte durchgeführt: Zunächst wird die Raumlage des Suchgeräts über eine vorgebbare Zeitdauer bestimmt. Dabei kann die absolute Raumlage ermittelt werden oder die relative Raumlage, also Raumlageänderungen. Letzteres ermöglicht eine einfachere Verarbeitung der dabei entstehenden Signale. Wird bei der Bestimmung der Raumlage ein vorgebbarer Schwellwert nicht überschritten, ist dies ein Indiz dafür, dass der Verschüttungsfall vorliegt, d.h. der Verschüttete sich mit dem Suchgerät gar nicht oder zumindest nur sehr gering bewegt. Erst in dem Fall werden dann die Schritte des erfindungsgemäßen Verfahrens durchgeführt. Diese bevorzugte Ausführungsform weist den Vorteil auf, dass ein Umschalten der Sendeantenne nur im Verschüttungsfall vorgenommen wird. Ein fortwährendes Umschalten der Sendeantenne aufgrund einer unsachgemäßen Mitführung eines erfindungsgemäßen Suchgeräts wird dadurch zuverlässig vermieden. Die vorgebbare Zeitdauer liegt bevorzugt im Bereich weniger Sekunden bis zu einer Minute.

Die mit Bezug auf das erfindungsgemäße Suchgerät vorgestellten bevorzugten Ausführungsformen und deren Vorteile gelten, soweit anwendbar, auch für das erfindungsgemäße Verfahren.

Im Nachfolgenden wird nun ein Ausführungsbeispiel eines erfindungsgemäßen Suchgeräts unter Bezugnahme auf die beigefügten Zeichnungen näher beschrieben. Es zeigen:
- Fig. 1: in schematischer Darstellung den Aufbau eines erfindungsgemäßen Suchgeräts; und
- Fig. 2: in schematischer Darstellung den Einsatz eines erfindungsgemäßen Suchgeräts bei der Suche nach einer in einer Lawine verschütteten Person.

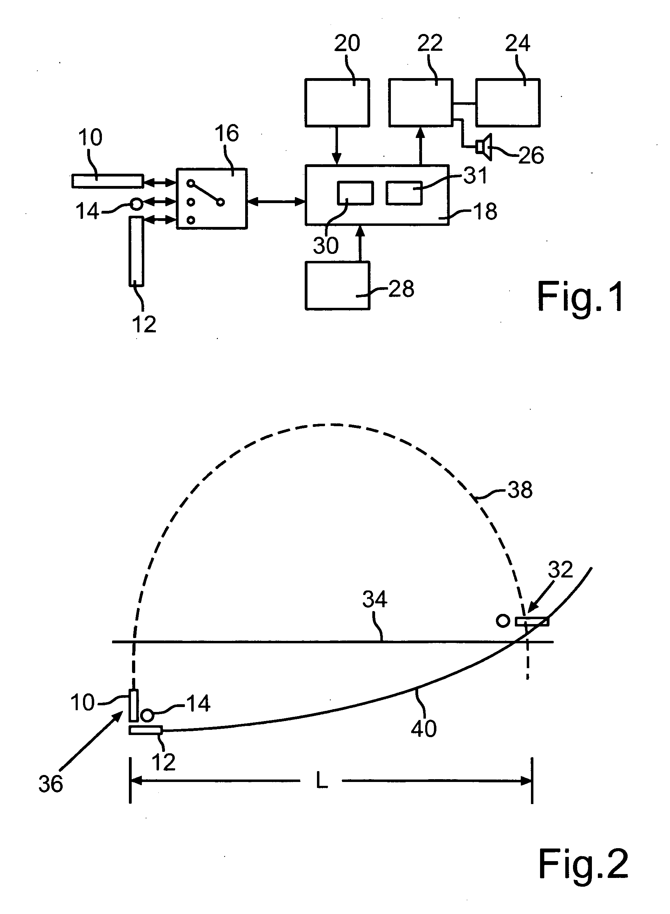

Fig. 1 zeigt in schematischer Darstellung den Aufbau eines Ausführungsbeispiels eines erfindungsgemäßen Suchgeräts. Dieses weist eine erste 10, zweite 12 und dritte Antenne 14 auf. Mittels eines Umschalters 16 kann im Empfangs- und Sendebetrieb zwischen den drei Antennen 10, 12, 14 umgeschaltet werden. Das erfindungsgemäße Suchgerät weist einen Mikrokontroller 18 auf, der mit einer Sendeeinheit 20 und einer Empfangseinheit 22 gekoppelt ist. Die Sendeeinheit 20 umfasst einen nicht dargestellten Sendeoszillator, der insbesondere ausgelegt ist, ein Signal auf einer Frequenz von 457 kHz zu erzeugen. Die Empfangseinheit 22 ist in bekannter Weise mit einer Anzeigeeinheit 24, beispielsweise einem LED-Display, sowie einem Lautsprecher 26 gekoppelt. Der Mikroprozessor 18 ist weiterhin mit einem Lagesensor 28 gekoppelt, der einen Magnetfeldsensor, insbesondere einen dreidimensionalen Magnetfeldsensor, zur Auswertung des Erdmagnetfelds zur Bestimmung der Lage des Suchgeräts umfassen kann. Er kann alternativ oder zusätzlich mindestens einen Neigungssensor, insbesondere zwei oder drei Neigungssensoren, zur Bestimmung der Lage des Suchgeräts umfassen. Der Mikroprozessor 18 weist eine Speichereinrichtung 30 auf, in der ein erster Wertebereich eines vom Lagesensor 28 gelieferten Lagesignals sowie ein zweiter Bereich des Lagesignals abgelegt ist. Stellt der Mikroprozessor 18 anhand des vom Lagesensor 28 gelieferten Lagesignals fest, dass das Lagesignal in einem ersten Wertebereich liegt, so steuert er den Umschalter 16 derart an, dass im Sendebetrieb die Sendeantenne 10 verwendet wird. Liegt das Lagesignal hingegen in einem zweiten Wertebereich, steuert der Mikroprozessor 18 den Umschalter 16 derart an, dass die Sendeantenne 12 zum Senden des Sendesignals verwendet wird. In einem nicht dargestellten Ausführungsbeispiel kann vorgesehen sein, dass in Abhängigkeit von in der Speichervorrichtung 30 abgelegten Wertebereichen eine der drei Antennen 10, 12, 14 zum Senden des Sendesignals ausgewählt wird.

In dem Ausführungsbeispiel von Fig. 1 ist die Antenne 10 in Längsrichtung des Suchgeräts und die Antenne 12 in Querrichtung des Suchgeräts angeordnet. Dabei ist der Antenne 12 ein Wertebereich zugeordnet, dem eine Lage des Suchgeräts mit einer Neigung des Suchgeräts kleiner gleich 30°, bevorzugt kleiner gleich 20°, gegenüber der Vertikalen zugeordnet ist.

Bei der Ausführungsform von Figur 1 weist das Suchgerät weiterhin eine Zeitmessvorrichtung 31 auf. Dies ermöglicht das fortwährende Umschalten der Sendeantenne bei unsachgemäßer Mitführung eines erfindungsgemäßen Suchgeräts zu verhindern. Dabei wird überprüft, ob die Raumlage, relativ oder absolut, über eine vorgebbare Zeitdauer stabil ist, d.h. die Änderungen einen vorgebbaren Grenzwert nicht überschreiten. Ist dies der Fall, stellt dies ein starkes Indiz dafür dar, dass der Verschüttungsfall vorliegt, in dem sich der Verschüttete und damit das Suchgerät nicht mehr oder zumindest kaum mehr bewegen können. Erst dann, wenn dieser Fall erkannt wurde, wird die absolute Raumlage des Suchgeräts ermittelt und auf die Sendeantenne umgeschaltet, der diese Raumlage zugeordnet ist.

Fig. 2 zeigt in schematischer Darstellung die Situation bei der Suche nach einem Verschütteten. Der Suchende 32 hat ein Suchgerät, das zwei Empfangsantennen aufweist, die parallel zur Oberfläche eines Lawinensuchfelds 34 ausgerichtet sind. Der Verschüttete 36 verfügt über ein erfindungsgemäßes Suchgerät, wobei die üblicherweise im Stand der Technik zum Senden verwendete Antenne 10 in vertikaler Lage in der Lawine zu liegen gekommen ist. Wird diese Antenne 10 zum Senden eines Sendesignals verwendet, ergeben sich Feldlinien, von denen exemplarisch die Feldlinie 38 dargestellt ist. Diese durchläuft die Empfangsantenne des Suchgeräts des Suchenden 32 nahezu senkrecht und erzeugt deshalb nur ein sehr kleines Feldstärkesignal. Da das Suchgerät des Verschütteten 36 um weniger als 30° gegenüber der Vertikalen geneigt ist, wird erfindungsgemäß jedoch zum Senden des Sendesignals nicht die Antenne 10, sondern die Antenne 12 verwendet. Diese erzeugt im Sendebetrieb Feldlinien, wovon die Feldlinie 40 exemplarisch eingezeichnet ist. Wie deutlich zu erkennen, durchläuft diese die Empfangsantenne des Suchgeräts des Suchenden 32 in einem wesentlich flacheren Winkel und führt deshalb zur Erzeugung eines Feldstärkesignals einer wesentlich größeren Amplitude als im Falle der Feldlinie 38. Während bei Auswertung der Feldlinie 38 der in Fig. 2 eingezeichnete Abstand L maximal 20 m betragen darf, um zu einer Anzeige auf dem Suchgerät des Suchenden 32 zu führen, kann der Abstand L bei Auswertung der Feldlinie 40 in etwa 40 m betragen, um zu einer Anzeige auf dem Suchgerät des Suchenden 32 zu führen.

## Patentansprüche

1. Suchgerät, insbesondere Lawinen-Verschütteten-Suchgerät, mit einer Empfangseinheit (22) zum Empfangen von Sendesignalen zur Ortung eines Senders und einer Sendeeinheit (20) zum Senden von Sendesignalen, wobei zumindest der Sendeeinheit (20) mindestens eine erste (10) und eine zweite Sendeantenne (12) zugeordnet sind, die in unterschiedlichen Raumrichtungen orientiert im Suchgerät angeordnet sind, wobei im Sendebetrieb nur eine der Sendeantennen (10; 12) in Betrieb ist,
**dadurch gekennzeichnet,**
**dass** das Suchgerät weiterhin umfasst:
- mindestens einen Lagesensor (28), der ausgelegt ist, eine Raumlage des Suchgeräts zu bestimmen und an seinem Ausgang ein Lagesignal bereitzustellen, das mit der Raumlage korreliert ist; und
- eine Umschaltvorrichtung (16), die einerseits mit dem mindestens einen Lagesensor (28) zur Zuführung des Lagesignals und andererseits mit der mindestens einen ersten (10) und zweiten Sendeantenne (12) gekoppelt ist,
wobei der ersten Sendeantenne (10) ein erster Wertebereich des Lagesignals und der zweiten Sendeantenne (12) ein zweiter Wertebereich des Lagesignals zugeordnet ist, wobei die Umschaltvorrichtung (16) ausgelegt ist, im Sendebetrieb das Sendesignal über die erste Sendeantenne (10) zu senden, wenn das Lagesignal im ersten Wertebereich liegt, und im Sendebetrieb das Sendesignal über die zweite Sendeantenne (12) zu senden, wenn das Lagesignal im zweiten Wertebereich liegt.

2. Suchgerät nach Anspruch 1,
**dadurch gekennzeichnet,**
**dass** das Suchgerät weiterhin eine dritte Sendeantenne (14) umfasst, der ein dritter Wertebereich des Lagesignals zugeordnet ist, wobei die Umschaltvorrichtung (16) ausgelegt ist, das Sendesignal über die dritte Sendeantenne (14) zu senden, wenn das Lagesignal im dritten Wertebereich liegt.

3. Suchgerät nach einem der Ansprüche 1 oder 2,
**dadurch gekennzeichnet,**
**dass** zumindest die erste (10) und die zweite Sendeantenne (12) orthogonal zueinander angeordnet sind.

4. Suchgerät nach einem der vorhergehenden Ansprüche,
**dadurch gekennzeichnet,**
**dass** der Lagesensor (28) einen Magnetfeldsensor, insbesondere einen dreidimensionalen Magnetfeldsensor, zur Auswertung des Erdmagnetfelds zur Bestimmung der Lage des Suchgeräts umfasst.

5. Suchgerät nach einem der vorhergehenden Ansprüche,
**dadurch gekennzeichnet,**
**dass** der Lagesensor (28) mindestens einen Neigungssensor, insbesondere mindestens einen zweiachsigen Neigungssensor, zur Bestimmung der Lage des Suchgeräts umfasst.

6. Suchgerät nach einem der vorhergehenden Ansprüche,
**dadurch gekennzeichnet,**
**dass** der Lagesensor (28) mindestens einen Beschleunigungssensor zur Bestimmung der Lage des Suchgeräts umfasst.

7. Suchgerät nach einem der vorhergehenden Ansprüche,
**dadurch gekennzeichnet,**
**dass** der Lagesensor (28) mindestens einen Gyrosensor zur Bestimmung der Lage des Suchgeräts umfasst.

8. Suchgerät nach einem der vorhergehenden Ansprüche,
**dadurch gekennzeichnet,**
**dass** die erste Sendeantenne (10) in Längsrichtung des Suchgeräts und die zweite Sendeantenne (12) in Querrichtung des Suchgeräts angeordnet ist, wobei dem zweiten Wertebereich eine Lage des Suchgeräts mit einer Neigung des Suchgeräts kleiner gleich 30°, bevorzugt kleiner gleich 20°, gegenüber der Vertikalen zugeordnet ist.

9. Suchgerät nach einem der vorhergehenden Ansprüche,
**dadurch gekennzeichnet,**
**dass** das Suchgerät weiterhin eine Zeitmessvorrichtung (31) umfasst, wobei das Suchgerät ausgelegt ist, die Raumlageänderungen des Suchgeräts über eine vorgebbare Zeitdauer zu bestimmen und gegen einen vorgebbaren Grenzwert zu vergleichen.

10. Verfahren zum Betreiben eines Suchgeräts, insbesondere Lawinen-Verschütteten-Suchgerät, mit einer Empfangseinheit (22) zum Empfangen von Sendesignalen zur Ortung eines Senders und einer Sendeeinheit (20) zum Senden von Sendesignalen, wobei zumindest der Sendeeinheit (20) mindestens eine erste (10) und eine zweite Sendeantenne (12) zugeordnet sind, die in unterschiedlichen Raumrichtungen orientiert im Suchgerät angeordnet sind, wobei im Sendebetrieb nur eine der Sendeantennen (10; 12) in Betrieb ist,
**gekennzeichnet durch** folgende Schritte:
a) Bestimmen einer Raumlage des Suchgeräts; und
b) Senden des Sendesignals über die Sendeantenne (10; 12), der die in Schritt a) bestimmte Raumlage zugeordnet ist.

11. Verfahren nach Anspruch 10,
**dadurch gekennzeichnet,**
**dass** vor Schritt a) folgende Schritte ausgeführt werden:
- Bestimmen der Raumlageänderungen des Suchgeräts über eine vorgebbare Zeitdauer; und
- Falls die Raumlageänderungen innerhalb des vorgebbaren Zeitraums einen vorgebbaren Schwellwert nicht überschreiten: Durchführen der Schritte a) und b).

## Claims

1. Searching apparatus, especially avalanche transceiver, including a receiving unit (22) for receiving transmission signals for locating a transmitter and a transmitting unit (20) for transmitting transmission signals, wherein at least a first (10) and a second transmitting antenna (12) are associated with at least the transmitting unit (20), which are disposed in the searching apparatus oriented in different spatial directions, wherein only one of the transmitting antennas (10; 12) is in operation in the transmission mode,
**characterized in that**
the searching apparatus further includes:
- at least one position sensor (28) configured to determine a spatial position of the searching apparatus and to provide a position signal on its output which is correlated with the spatial position; and
- a switching device (16) coupled to the at least one position sensor (28) for supplying the position signal on the one hand and to the at least one first (10) and second transmitting antenna (12) on the other hand,
wherein a first range of values of the position signal is associated with the first transmitting antenna (10) and a second range of values of the position signal is associated with the second transmitting antenna (12), wherein the switching device (16) is adapted to transmit the transmission signal over the first transmitting antenna (10) in the transmission mode, if the position signal is in the first range of values, and to transmit the transmission signal over the second transmitting antenna (12) in the transmission mode, if the position signal is in the second range of values.

2. Searching apparatus according to claim 1,
**characterized in that**
the searching apparatus further includes a third transmitting antenna (14) with which a third range of values of the position signal is associated,
wherein the switching device (16) is adapted to transmit the transmission signal over the third transmitting antenna (14) if the position signal is in the third range of values.

3. Searching apparatus according to any one of claims 1 or 2,
**characterized in that**
at least the first (10) and the second transmitting antenna (12) are disposed orthogonally to each other.

4. Searching apparatus according to anyone of the preceding claims,
**characterized in that**
the position sensor (28) includes a magnetic field sensor, especially a three-dimensional magnetic field sensor, for evaluating the earth magnetic field for determining the position of the searching apparatus.

5. Searching apparatus according to anyone of the preceding claims,
**characterized in that**
the position sensor (28) includes at least one inclination sensor, especially at least one two-axis inclination sensor, for determining the position of the searching apparatus.

6. Searching apparatus according to anyone of the preceding claims,
**characterized in that**
the position sensor (28) includes at least one acceleration sensor for determining the position of the searching apparatus.

7. Searching apparatus according to anyone of the preceding claims,
**characterized in that**
the position sensor (28) includes at least one gyro sensor for determining the position of the searching apparatus.

8. Searching apparatus according to anyone of the preceding claims,
**characterized in that**
the first transmitting antenna (10) is disposed in the longitudinal direction of the searching apparatus and the second transmitting antenna (12) is disposed in the transverse direction of the searching apparatus, wherein a position of the searching apparatus with an inclination of the searching apparatus of less than or equal to 30°, preferably less than or equal to 20°, with respect to the vertical is associated with the second range of values.

9. Searching apparatus according to anyone of the preceding claims,
**characterized in that**
the searching apparatus further includes a time measuring device (31),
wherein the searching apparatus is adapted to determine the spatial position variations of the searching apparatus over a presettable time period and to compare them against a presettable limit value.

10. Method for operating a searching apparatus, especially an avalanche transceiver, including a receiving unit (22) for receiving transmission signals for locating a transmitter and a transmitting unit (20) for transmitting transmission signals, wherein at least a first (10) and a second transmitting antenna (12) are associated with at least the transmitting unit (20), which are disposed in the searching apparatus oriented in different spatial directions,
wherein only one of the transmitting antennas (10; 12) is in operation in the transmission mode,
**characterized by** the following steps:
a) determining a spatial position of the searching apparatus; and
b) transmitting the transmission signal over the transmitting antenna (10; 12), with which the spatial position determined in step a) is associated.

11. Method according to claim 10,
**characterized in that**
the following steps are performed before step a):
- determining the spatial position variations of the searching apparatus over a presettable time period; and
- if the spatial position variations do not exceed a presettable threshold value within the presettable time period: performing steps a) and b).

## Revendications

1. Appareil de recherche, en particulier appareil de recherche de victimes d'avalanches, avec une unité de réception (22), destinée à recevoir des signaux d'émission pour localiser un émetteur et une unité d'émission (20), destinée à envoyer des signaux d'émission, au moins une première (10) et une deuxième antenne d'émission (12) étant affectées au moins à l'unité d'émission (20), antennes qui sont disposées dans l'appareil de recherche, orientées dans différentes directions dans l'espace, une seule des antennes d'émission (10 ; 12) étant en service en mode d'émission,
**caractérisé en ce**
**que** l'appareil de recherche comprend encore :
- au moins un détecteur de position (28), qui est dimensionné pour déterminer une position de l'appareil de recherche dans l'espace et pour mettre à disposition, à sa sortie, un signal de position, qui est corrélé avec la position dans l'espace et
- un mécanisme de commutation (16), qui est couplé d'une part avec le au moins un détecteur de position (28), destiné à admettre le signal de position et d'autre part avec la au moins une première (10) et deuxième antenne d'émission (12),
une première plage de valeurs du signal de position étant attribuée à la première antenne d'émission (10) et une deuxième plage de valeurs du signal de position étant attribuée à la deuxième antenne d'émission (12), le mécanisme de commutation (16) étant dimensionné, en mode d'émission, pour envoyer le signal d'émission par l'intermédiaire de la première antenne d'émission (10), quand le signal de position se trouve dans la première plage de valeurs et, en mode d'émission, pour envoyer le signal d'émission par l'intermédiaire de la deuxième antenne d'émission (12), quand le signal de position se trouve dans la deuxième plage de valeurs.

2. Appareil de recherche suivant la revendication 1,
**caractérisé en ce**
**que** l'appareil de recherche comprend encore une troisième antenne d'émission (14), à laquelle est affectée une troisième plage de valeurs du signal de position, le mécanisme de commutation (16) étant dimensionné pour envoyer le signal d'émission par l'intermédiaire de la troisième antenne d'émission (14), quand le signal de position se trouve dans la troisième plage de valeurs.

3. Appareil de recherche suivant l'une des revendications 1 ou 2,
**caractérisé en ce**
**qu'**au moins la première (10) et la deuxième antenne d'émission (12) sont disposées de manière orthogonale l'une par rapport à l'autre.

4. Appareil de recherche suivant l'une des revendications précédentes,
**caractérisé en ce**
**que** le détecteur de position (28) comprend un détecteur de champ magnétique, en particulier un détecteur de champ magnétique tridimensionnel, destiné à évaluer le champ magnétique terrestre, pour déterminer la position de l'appareil de recherche.

5. Appareil de recherche suivant l'une des revendications précédentes,
**caractérisé en ce**
**que** le détecteur de position (28) comprend au moins un détecteur d'inclinaison, en particulier au moins un détecteur d'inclinaison biaxial, destiné à déterminer la position de l'appareil de recherche.

6. Appareil de recherche suivant l'une des revendications précédentes,
**caractérisé en ce**
**que** le détecteur de position (28) comprend au moins un détecteur d'accélération, destiné à déterminer la position de l'appareil de recherche.

7. Appareil de recherche suivant l'une des revendications précédentes,
**caractérisé en ce**
**que** le détecteur de position (28) comprend au moins un gyrodétecteur, destiné à déterminer la position de l'appareil de recherche.

8. Appareil de recherche suivant l'une des revendications précédentes,
**caractérisé en ce**
**que** la première antenne d'émission (10) est disposée dans le sens longitudinal de l'appareil de recherche et que la deuxième antenne d'émission (12) est disposée dans le sens transversal de l'appareil de recherche, une position de l'appareil étant affectée à la deuxième plage de valeurs, avec une inclinaison de l'appareil de recherche inférieure ou égale à 30°, de préférence inférieure ou égale à 20°, par rapport à la verticale.

9. Appareil de recherche suivant l'une des revendications précédentes,
**caractérisé en ce**
**que** l'appareil de recherche comprend encore un mécanisme de mesure de temps (31), l'appareil de recherche étant dimensionné pour déterminer les changements de position de l'appareil de recherche dans l'espace par l'intermédiaire d'une durée pouvant être paramétrée et les comparer à une valeur limite pouvant être paramétrée.

10. Procédé d'exploitation d'un appareil de recherche, en particulier d'un appareil de recherche de victimes d'avalanches, avec une unité de réception (22), destinée à recevoir des signaux d'émission, pour localiser un détecteur et une unité d'émission (20), destinée à envoyer des signaux d'émission, au moins une première (10) et une deuxième antenne d'émission (12) étant affectées au moins à l'unité d'émission (20), antennes qui sont disposées dans l'appareil de recherche, orientées dans différentes directions dans l'espace, une seule des antennes d'émission (10 ; 12) étant en service en mode d'émission,
**caractérisé par** les étapes suivantes :
a) détermination d'une position de l'appareil de recherche dans l'espace et
b) envoi du signal d'émission par l'intermédiaire de l'antenne d'émission (10 ; 12), à laquelle est affectée la position dans l'espace, déterminée au cours de l'étape a).

11. Procédé suivant la revendication 10;
**caractérisé en ce**
**que** les étapes suivantes sont exécutées avant l'étape a) :
- détermination des changements de position de l'appareil de recherche dans l'espace par l'intermédiaire d'une durée pouvant être paramétrée et
- si les changements de position dans l'espace ne dépassent pas une valeur seuil pouvant être paramétrée dans les limites de la durée pouvant être paramétrée : exécution des étapes a) et b).
